# FASCICULE DE BREVET EUROPEEN

(11) **EP 3 060 958 B1**
(45) Date de publication et mention de la délivrance du brevet: **15.08.2018**
(21) Numéro de dépôt: 14824883.4
(22) Date de dépôt: 23.10.2014
(51) Int. Cl.: G02C 11/00, G08B 21/18

(54) **DISPOSITIF ET PROCÉDÉ DE DÉTERMINATION D'UN MODE D'ÉCRITURE OU DE LECTURE**
VORRICHTUNG UND VERFAHREN ZUR BESTIMMUNG EINES SCHREIB- ODER LESEMODUS
DEVICE AND METHOD FOR DETERMINING A WRITING OR READING MODE

(30) Priorité: 25.10.2013 FR 1360460
(43) Date de publication de la demande: 31.08.2016
(73) Titulaire: Essilor International, 94220 Charenton-le-Pont (FR)
(72) Inventeur: HADDADI, Ahmed, F-94220 Charenton-le-Pont (FR)
(74) Mandataire: Godard, Evelin
(86) Numéro de dépôt international: PCT/FR2014/052699
(87) Numéro de publication internationale: WO 2015/059417

(56) Documents cités:
- EP-A1- 1 087 252
- WO-A1-97/17043
- WO-A1-2012/036638
- WO-A2-2008/078320
- WO-A2-2009/024681
- CN-Y- 2 370 437

## Description

La présente invention se rapporte à un dispositif de détermination d'un mode d'écriture ou de lecture d'un individu porteur de lunettes. Cette invention concerne le domaine des équipements visuels, et porte plus particulièrement sur les lunettes comportant des verres correcteurs pour la vision de près. L'invention concerne également un procédé de détermination d'un mode d'écriture ou de lecture du porteur de lunettes au moyen dudit dispositif.

Généralement, il est reconnu qu'un individu porteur de lunettes est susceptible d'aggraver son défaut visuel s'il n'adopte pas des règles de bonne pratique en matière, par exemple, d'écriture ou de lecture. On a notamment constaté que certains porteurs de lunettes ont la tendance de se rapprocher de façon déraisonnable du plan de lecture et/ou d'écriture, en particulier au cours d'un travail de durée prolongée. Il est également connu que la myopie est généralement le résultat d'un processus complexe évoluant au cours de la vie. Notamment, l'exposition continue et répétée à des mauvaises conditions de travail en vision de près (posture inadaptée, éclairage insuffisant, etc.), en plus d'une myopie congénitale (présente à la naissance) ou non, favorise le développement de la myopie car l'oeil est sollicité de manière plus importante du fait de l'augmentation de l'angle de vergence et de l'accommodation de l'oeil. Ceci est particulièrement important dans le cas où le porteur de lunettes est un enfant scolarisé ayant de nombreuses activités journalières qui sollicitent le travail en vision de près.

Il existe des dispositifs montés sur des montures de lunettes mesurant la distance entre la monture et le plan de travail fixé par le porteur. WO 2008/078320 A2 divulgue des lunettes ayant un dispositif qui permet de changer entre deux modes de fonctionnement en fonction de la distance des lunettes à l'objet et de l'angle d'inclinaison de la tête du porteur. Aussi, EP 1 087 252 A1 décrit une monture de lunettes pourvue de moyens de télémétrie pour mesurer la distance entre une lentille de la monture et un point fixé par le porteur, ainsi qu'une alarme déclenchée par les moyens de télémétrie lorsque la distance mesurée est inférieure à une distance de consigne. Par exemple, les moyens de télémétrie comportent une diode d'émission infrarouge et un capteur sensible dans l'infrarouge, et sont contenus dans un boitier qui se fixe sur le pont des lunettes.

Cependant, ce type de dispositif ne tient pas compte du fait que le point fixé par le porteur de lunettes peut être constitué par un plan de travail horizontal tel que le dessus d'une table ou d'un bureau, par un écran d'ordinateur, ou par un objet tenu dans les mains du porteur, tel qu'un livre ou un appareil électronique ayant un écran. Ainsi, les angles d'incidence peuvent être grands et varier de façon importante. Notamment, ce dispositif n'est pas adapté pour distinguer entre un mode lecture et un mode écriture. Aussi, le dispositif décrit ne tient pas compte du fait que le porteur de lunettes peut être droitier ou gaucher, ce qui conduit à des contraintes liées à la posture du porteur.

La présente invention a pour objectif de remédier aux inconvénients cités ci-dessus en proposant un dispositif de mesure compact et ergonomique, permettant une mesure de la distance de travail (lecture, observation et/ou d'écriture) fiable et précise. Ceci permet d'alerter le porteur d'une mauvaise posture en vision de près quelle que soit la nature du plan fixé par le porteur. L'invention propose également un procédé de mesure mis en oeuvre au moyen du dispositif conforme à l'invention.

La présente invention répond à cet objectif en proposant un dispositif comme décrit dans la revendication 1. Grâce à ce dispositif, il est possible de distinguer entre le mode lecture et le mode écriture, afin de pouvoir évaluer de manière distinctive la posture de l'individu dans ces modes.

L'expression « plan moyen des deux verres » peut, de manière équivalente, également signifier le plan moyen des deux cercles de la monture encadrant les verres dans le cadre de cette description.

Un « élément de la tête » peut être constitué par un point anatomique de la tête (par exemple, le centre de rotation de l'oeil, la pupille, les commissures des yeux, le front, etc.) en relation à la monture. La position relative à la monture peut-être prédéterminée (par exemple, par une estimation statistique) ou mesurée (par exemple, par un système de mesure bi- ou tridimensionnel.

Avantageusement, le dispositif est destiné à être solidarisé à la monture de lunettes. Le terme « solidarisé » signifie ajouté à la monture au moyen par exemple d'un clip ou plus généralement d'un support amovible, ou incorporé directement à la monture, par exemple dans l'une des branches de la monture. Ainsi, l'individu porteur de lunettes n'adopte aucune posture contraignante susceptible de le gêner, mais au contraire, évolue naturellement, comme il le ferait dans son quotidien lors de ses activités habituelles.

Préférentiellement, les moyens de mesure de distance étant adaptés pour mesurer la distance entre le plan moyen des deux verres de la monture et un plan de travail. Les moyens de mesure de distance peuvent, par exemple, être fixés sur ou incorporés dans l'une des branches des lunettes.

Les moyens de mesure de distance peuvent également être situés dans le plan de travail, par exemple à proximité du plan de lecture ou d'écriture. Par exemple, les moyens de mesure de distance peuvent être intégrés dans un support de lecture électronique tel qu'une tablette.

Préférentiellement, le dispositif comprend en outre des moyens d'avertissement, déclenchés par les moyens de contrôle lorsque :
- en mode lecture, la distance mesurée est inférieure à une distance de consigne de lecture prédéterminée, et/ou
- en mode écriture, la distance mesurée est inférieure à une distance de consigne d'écriture prédéterminée.

Les moyens d'avertissement peuvent être intégrés à la monture de lunettes ou au support de lecture, tel qu'une tablette électronique.

Ainsi, grâce à ce dispositif, le porteur de lunettes est alerté dès qu'il se rapproche trop du plan de lecture ou d'écriture pour lui permettre de corriger sa posture, indépendamment de son mode de travail (lecture ou écriture). Une bonne distance au plan de travail, en vision de près, permet de ne pas favoriser l'évolution de la myopie en particulier ou d'autres défauts visuels comme l'hypermétropie.

Avantageusement, les moyens de contrôle sont aptes à distinguer entre le mode lecture et le mode écriture en fonction d'un angle seuil d'inclinaison prédéterminé si l'angle d'inclinaison mesuré est supérieur à l'angle d'inclinaison de consigne, le mode lecture étant associé à un angle d'inclinaison inférieur à l'angle seuil d'inclinaison prédéterminé et supérieur à l'angle d'inclinaison de consigne, et le mode écriture étant associé à un angle d'inclinaison supérieur à l'angle seuil d'inclinaison prédéterminé.

Préférentiellement, le dispositif comprend en outre des moyens de mesure d'une valeur de luminance du plan de lecture et/ou d'écriture, dans lequel les moyens d'avertissement sont déclenchés par les moyens de contrôle lorsque la valeur mesurée de luminance est inférieure à une valeur de consigne de luminance fonction de la distance mesurée et du mode lecture ou écriture dans lequel se trouve l'individu porteur de lunettes.

Le porteur de lunettes est ainsi alerté dès que la luminance de son plan de travail ou de l'éclairement ambiant n'est pas suffisante pour une vision correcte, compte tenu de la distance de lecture ou d'écriture.

De manière avantageuse, les moyens de mesure de distance comprennent deux émetteurs agencés, dans le plan vertical, avec un angle non nul entre leurs axes principaux d'émission, et un récepteur agencé de manière à pouvoir recevoir le signal émis par au moins l'un des deux émetteurs et réfléchi par le plan de travail.

Cet agencement des moyens de mesure permet une détection du signal réfléchi particulièrement précise et robuste, même si le signal est émis avec un angle d'incidence important sur le plan de travail dans le plan vertical.

Dans un mode de réalisation, le plan moyen des deux verres de la monture est agencé avec un angle pantoscopique compris généralement entre 8° et 10° par rapport à la verticale. Avantageusement, les moyens de mesure de distance sont agencés avec un angle de leurs axes principaux compris entre 0° et 20° par rapport au plan moyen des deux verres de la monture, dans le plan vertical perpendiculaire au plan moyen des verres.

Selon une variante, les moyens de mesure de distance sont agencés avec un angle de tilt horizontal δ de leurs axes principaux compris entre - 45° et 0° par rapport à la droite orthogonale au plan moyen des deux verres de la monture. Avantageusement, l'angle de tilt horizontal δ est ajustable en fonction de la forme et/ou de la morphologie de l'individu porteur de lunettes.

De manière préférentielle, les moyens de mesure de l'angle d'inclinaison comprennent un inclinomètre et/ou un accéléromètre.

Selon un mode de réalisation, le dispositif selon l'invention comprend en outre des moyens de communication aptes à communiquer avec un dispositif extérieur d'enregistrement et/ou d'affichage.

Selon des modes de réalisation, les moyens d'avertissement comprennent au moins l'un d'une alarme visuelle, d'une alarme sonore et d'un vibreur, dans lequel l'alarme visuelle est visible par le porteur et/ou par une personne autre que le porteur.

Préférentiellement, le dispositif comprend en outre des moyens d'enregistrement aptes à enregistrer les distances mesurées, la valeur mesurée de luminance du plan de travail et/ou le nombre de déclenchements des moyens d'avertissement.

Avantageusement, les valeurs des distances de consigne de lecture et/ou d'écriture et/ou la valeur de consigne de luminance sont personnalisables.

La présente également concerne également un procédé de détermination d'un mode d'écriture ou de lecture d'un individu porteur de lunettes au moyen d'un dispositif selon l'invention, le procédé comprenant les étapes suivantes :
- mesurer la distance de travail entre le plan moyen des deux verres de la monture et ledit plan de travail ;
- mesurer l'angle d'inclinaison du plan moyen des deux verres par rapport à la verticale dans ledit plan vertical ;
- comparer l'angle d'inclinaison mesuré à un angle d'inclinaison de consigne ; et
- déterminer un mode de lecture ou un mode d'écriture de l'individu en fonction de la comparaison, le mode lecture étant associé à une distance de consigne de lecture prédéterminée, et le mode écriture étant associé à une distance de consigne d'écriture prédéterminée.

Avantageusement, le procédé selon l'invention comprend en outre l'étape de :
- déclencher un avertissement afin d'avertir le porteur de corriger sa posture, en fonction du mode de lecture ou d'écriture, si ladite distance mesurée est inférieure à une distance de consigne prédéterminée.

Préférentiellement, le procédé selon l'invention comprend en outre les étapes de :
- déterminer un paramètre de déplacement de la tête si l'angle d'inclinaison est supérieur à l'angle d'inclinaison de consigne pendant une durée prédéterminée ; et
- distinguer, si ledit paramètre de déplacement est inférieur à une valeur seuil de déplacement, entre le mode lecture et le mode écriture en fonction de l'angle seuil d'inclinaison, le mode lecture étant associé à un angle d'inclinaison inférieur à l'angle seuil d'inclinaison et supérieur à l'angle d'inclinaison de consigne, et le mode écriture étant associé à un angle d'inclinaison supérieur à l'angle seuil d'inclinaison.

La temporisation de la détermination du paramètre de déplacement de la tête permet d'éviter de déclencher l'avertissement lorsqu'un objet passe de manière passagère devant la monture de lunettes de la personne et ainsi de gêner la personne. En outre, la mesure du paramètre de déplacement permet de savoir si la personne est effectivement en train de lire ou d'écrire. Les mesures de distance ne sont effectuées que si le porteur de lunettes est réellement en mode lecture ou d'écriture, afin de permettre une gestion efficace des ressources d'énergie électrique du dispositif.

Selon une variante, le mode lecture est associé à une distance supplémentaire de consigne de lecture et le mode écriture est associé à une distance supplémentaire de consigne d'écriture, le procédé comprenant en outre l'étape de déclencher l'avertissement lorsque la distance mesurée est inférieure à la plus grande valeur entre la distance de consigne de lecture/écriture et la distance supplémentaire de consigne de lecture/écriture, respectivement, de manière à ce que l'intensité et/ou la fréquence du déclenchement varient proportionnellement en fonction de la distance mesurée de lecture/écriture entre la distance de consigne et la distance supplémentaire de consigne de lecture/écriture, respectivement.

Ceci permet au porteur de lunettes de savoir dans quelle mesure il s'est rapproché du plan de travail.

De manière avantageuse, le procédé comprend en outre les étapes de :
- enregistrer des données, les données comprenant les distances mesurées de lecture et/ou d'écriture, la valeur mesurée de luminance et/ou le nombre de déclenchements de l'avertissement ; et
- communiquer les données enregistrées vers un dispositif extérieur d'enregistrement et/ou d'affichage.

Préférentiellement, le procédé selon l'invention comprend en outre l'étape de communiquer en temps réel de données vers un dispositif extérieur d'enregistrement et/ou d'affichage, les données comprenant les distances mesurées de lecture et/ou d'écriture, la valeur mesurée de luminance et/ou le nombre de déclenchements de l'avertissement.

L'invention et les avantages qu'elle procure seront mieux compris au vu de la description suivante de modes de réalisation de l'invention, donnés à titre d'exemple et en référence aux figures annexées, dans lesquelles :
- la figure 1 montre, à titre d'exemple, une monture de lunettes dont une branche est équipée d'un dispositif de détermination d'un mode d'écriture ou de lecture selon l'invention ;
- la figure 2 représente une branche de monture de lunettes équipée d'un dispositif selon un mode de réalisation de l'invention ;
- la figure 3A illustre un porteur de lunettes en mode écriture ;
- la figure 3B illustre un porteur de lunettes en mode lecture ;
- la figure 4 montre schématiquement un exemple d'agencement angulaire de moyens de mesure de distance du dispositif selon un mode de réalisation, vu de côté ;
- la figure 5 montre un exemple d'agencement d'un jeu de moyens de mesure de distance du dispositif de détermination d'un mode d'écriture ou de lecture par rapport au plan moyen des deux verres (ou des deux cercles de la monture) d'une monture de lunettes ; et
- la figure 6 représente une succession d'étapes mises en oeuvre dans un procédé de détermination d'un mode d'écriture ou de lecture d'un porteur de lunettes conforme à l'invention.

Pour l'exemple décrit dans la description détaillée ci-dessous, il est supposé que les moyens de mesure de distance sont intégrés (fixés ou incorporés) à la monture de lunettes.

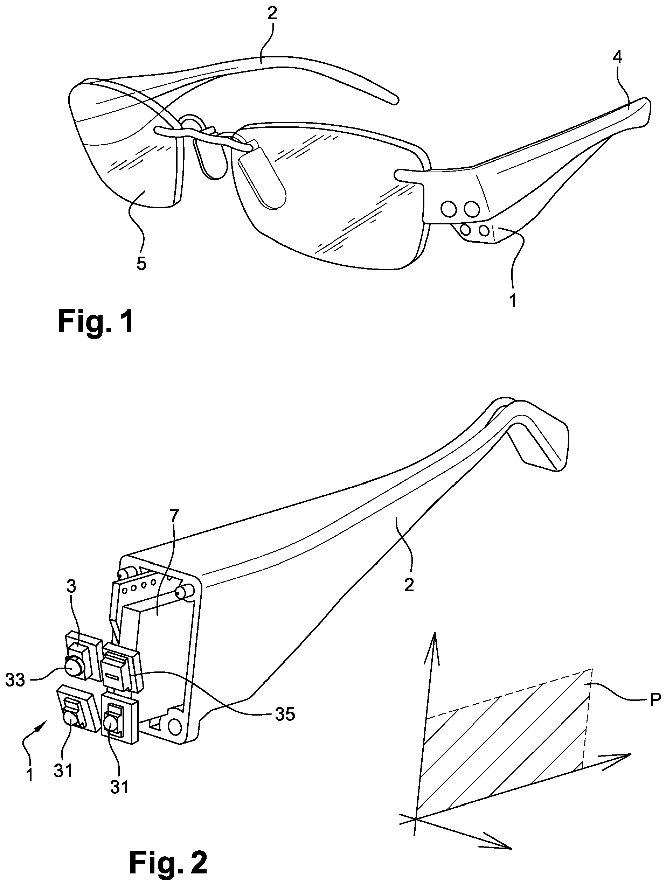

Selon un premier aspect, la présente invention propose un dispositif de détermination d'un mode d'écriture ou de lecture d'un porteur de lunettes destiné à être solidarisé à une monture de lunettes. Par exemple, les lunettes peuvent comprendre au moins une lentille correctrice de la myopie. La figure 1 montre à titre d'exemple, une monture 4 de lunettes comprenant des verres 5, et dont une branche 2 est équipée du dispositif 1 selon l'invention. Le dispositif 1 peut également être disposé sur le haut des cercles de la monture 4 encadrant les verres 5, ou bien sur le pontet de la monture 4.

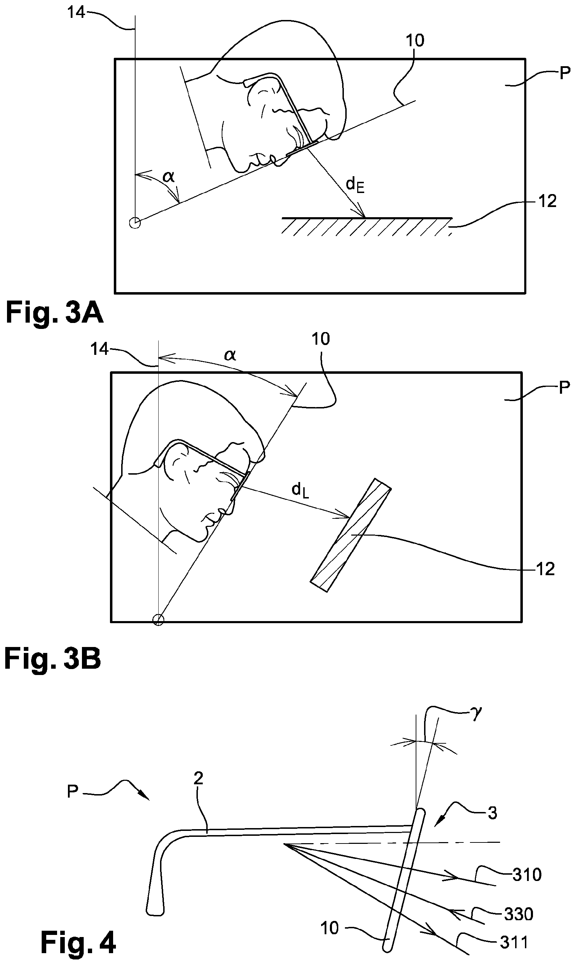

La figure 2 représente une branche 2 de monture 4 de lunettes équipée d'un dispositif 1 selon un mode de réalisation de l'invention. Le dispositif 1 comprend des moyens de mesure de la distance entre un élément de la monture ou de la tête et un plan de travail. Dans l'exemple illustré, les moyens de mesure de distance sont des moyens 3 de mesure de la distance entre un plan 10 moyen des deux des verres de la monture 4 (ou des deux cercles de la monture 4) (voir figure 4) et un plan de travail 12 (voir figures 3A et 3B). Ces moyens sont appelés également moyens 3 de télémétrie. Le plan de travail 12 est un plan dans lequel se trouve un livre, un document ou un écran sur lequel le porteur de lunettes lit ou écrit. Le plan de travail peut être constitué par un plan de lecture tel qu'un livre ou un cahier tenu dans les mains du porteur de lunettes. Le plan de travail peut également être constitué par un plan d'écriture tel qu'une table sur laquelle est posé un cahier. Le plan de lecture et le plan d'écriture peuvent être identiques ou différents.

Les moyens 3 de mesure de distance comprennent deux émetteurs 31 et un récepteur 33 (ou capteur) agencé de manière à pouvoir recevoir le signal émis par au moins l'un des deux émetteurs 31 et réfléchi par le plan de travail. Les moyens 3 de télémétrie peuvent comprendre, par exemple, deux diodes d'émission infrarouge et un capteur sensible aux infrarouges. Les diodes d'émission 31 peuvent émettre avec un certain cône d'émission, et le capteur 33 peut avoir un certain cône de réception.

Dans le mode de réalisation de la figure 2, le dispositif 1 comprend en outre des moyens 35 de mesure d'une valeur de luminance du plan de lecture ou d'écriture. Les moyens 35 de mesure d'une valeur de luminance du plan de travail peuvent être constitués, par exemple, par une photodiode ayant une sensibilité proche de celle de l'oeil humain au rayonnement visible. La relation entre l'éclairement *E* et la luminance *L* d'une surface lambertienne de réflectance ρ s'écrit *L* = *E*ρΠ.

En outre, le dispositif 1 comprend une batterie 7 pour alimenter en énergie électrique les différents composants du dispositif. La batterie peut être rechargeable, par exemple au moyen d'un câble connecteur micro-USB.

Le mode de réalisation de la figure 2, comportant deux émetteurs 31 et un récepteur 33, présente l'avantage d'une détection du signal réfléchi particulièrement précise et robuste, du fait que les capteurs sont disposés convergents vers le plan de travail. Leurs positions et orientations sont réglables en fonction de la morphologie du visage de l'individu porteur et/ou de la forme de la monture 4. Le plan P est le plan médian vertical de la tête de l'individu. Ce plan P est orthogonal au plan facial.

Le dispositif de détermination d'un mode d'écriture ou de lecture selon l'invention comprend également des moyens d'avertissement (non représentés). Selon des modes de réalisation, les moyens d'avertissement peuvent comprendre une alarme visuelle, telle qu'une diode électroluminescente (clignotante ou non), une alarme sonore, un vibreur, ou une combinaison de plusieurs de ces moyens. Les moyens d'avertissement peuvent également consister en l'envoi d'un message à un opérateur pouvant par exemple être un parent ou un opticien. L'alarme visuelle peut être visible par le porteur ou par une autre personne, ce qui implique que l'alarme visuelle peut être agencée à l'intérieur ou à l'extérieur de la monture 4 de lunettes. L'alarme visuelle présente l'avantage d'être discrète et peut, de ce fait, facilement être utilisée par un enfant porteur de lunettes dans une salle de classe.

Le dispositif selon l'invention comprend en outre des moyens (non représentés) de mesure d'un angle d'inclinaison du plan moyen des deux verres (ou des deux cercles de la monture) dans le plan vertical P. Selon des modes de réalisation préférés de l'invention, les moyens de mesure de l'angle d'inclinaison comprennent un inclinomètre et/ou un accéléromètre. Ces moyens de mesure permettent ainsi de mesurer des angles par rapport à l'horizontale, et notamment l'angle d'inclinaison de la tête de la personne. L'angle d'inclinaison α et le plan vertical P sont illustrés sur les figures 3A et 3B. Le plan vertical P correspond au plan de la figure. L'angle d'inclinaison α est mesuré entre la verticale 14 et le plan 10 des verres de la monture 4. L'angle d'inclinaison α correspond ainsi à un angle d'inclinaison de la tête du porteur de lunettes. L'angle d'inclinaison α peut être, par exemple, compris dans une plage allant de 30° à 80°, et être préférentiellement voisin de 70° lorsque la personne regarde un plan 12 de lecture ou d'écriture horizontal, comme illustré sur la figure 3A. Lorsque la personne regarde un plan 12 de lecture incliné, tel qu'un livre tenu dans les mains, l'angle d'inclinaison α de la tête peut être, par exemple, compris dans une plage allant de 0° à 45°, et être préférentiellement voisin de 35°.

Le dispositif selon la présente invention comprend également des moyens (non représentés) de contrôle aptes à distinguer entre un mode lecture et un mode écriture. Cette distinction est effectuée, par les moyens de contrôle, via une comparaison de l'angle d'inclinaison α à une valeur seuil de l'angle d'inclinaison. Dans un mode de réalisation, les moyens de contrôle déterminent si l'angle d'inclinaison α est supérieur à un angle d'inclinaison de consigne prédéterminé. Si c'est le cas et si l'angle d'inclinaison α est inférieur à l'angle seuil d'inclinaison, les moyens de contrôle déterminent que le porteur de lunettes est en mode lecture. Si l'angle d'inclinaison α est supérieur à l'angle seuil d'inclinaison, les moyens de contrôle déterminent que le porteur de lunettes est en mode écriture.

Les moyens de contrôle peuvent comprendre, par exemple, un microprocesseur. Le mode lecture est associé à une distance de consigne de lecture, et le mode écriture est associé à une distance de consigne d'écriture. Les valeurs de la distance de consigne de lecture et de la distance de consigne d'écriture peuvent être identiques ou différentes. Par exemple, les distances de consigne de lecture et d'écriture peuvent être d'environ 40 cm. Alternativement, la valeur de la distance de consigne de lecture peut être plus élevée que la valeur de la distance de consigne d'écriture.

Les figures 3A et 3B illustrent les modes écriture et lecture, respectivement. L'angle seuil d'inclinaison du plan 10 des verres peut être, par exemple, d'environ 20° par rapport à la verticale 14. Dans cet exemple, si l'angle d'inclinaison est inférieur à 20°, la personne est en mode écriture, ce qui correspond à une posture adaptée pour l'écriture sur un plan de travail horizontal. Si l'angle d'inclinaison est supérieur à 20°, la personne est en mode lecture.

Dans le dispositif selon la présente invention, les moyens d'avertissement sont déclenchés par les moyens de contrôle lorsque la distance mesurée en mode lecture est inférieure à la distance de consigne de lecture, et/ou lorsque la distance mesurée en mode écriture est inférieure à la distance de consigne d'écriture. Ainsi, lorsque la distance au plan de travail est trop faible en vision de près, le porteur de lunettes est averti par les moyens d'avertissement, et il est invité à s'éloigner du plan de travail en modifiant sa posture, afin de faire cesser les moyens d'avertissement de fonctionner. Selon un mode de réalisation, les moyens de mesure de la luminance sont couplés aux moyens d'avertissement, qui sont alors déclenchés par les moyens de contrôle lorsque la valeur mesurée de luminance est inférieure à une valeur de consigne de luminance fonction de la distance de lecture ou d'écriture, respectivement. Par exemple, la valeur de consigne de luminance peut être plus élevée si la distance au plan de travail est plus courte, et moins élevée si la distance au plan de travail est plus élevée. L'avertissement peut être déclenché même si la distance de consigne en fonction du mode dans lequel la personne se trouve est respectée.

La figure 4 montre un exemple d'agencement angulaire des moyens 3 de mesure de distance par rapport au plan 10 des verres de la monture 4, vu de côté. Dans cet exemple, les moyens 3 de mesure de distance sont agencés tel que leurs axes principaux d'émission ou de réception forment un angle compris entre 0° et 20° avec la droite orthogonale au plan 10 moyen des deux verres (ou des deux cercles) de la monture 4, dans le plan vertical P (qui correspond au plan de la figure). L'axe principal 310 de la première diode émettrice est orienté perpendiculairement au plan 10 moyen des verres de la monture 4, ce qui correspond à 0°. L'axe principal 310 de la première diode coïncide avec la droite orthogonale au plan 10 moyen des deux verres. L'axe principal 311 de la deuxième diode émettrice est orienté à 20° par rapport à l'axe principal 310 de la première diode émettrice. La diode réceptrice est agencée de manière à ce que son axe principal 330 soit orienté à 10° par rapport à l'axe principal 310, intermédiaire entre les directions d'émission des diodes émettrices.

En référence à la figure 4, le plan 10 des verres est typiquement agencé avec un angle pantoscopique γ d'environ 10° par rapport à la verticale 14, ce qui permet à la ligne du regard de la personne d'être perpendiculaire au plan moyen des deux verres.

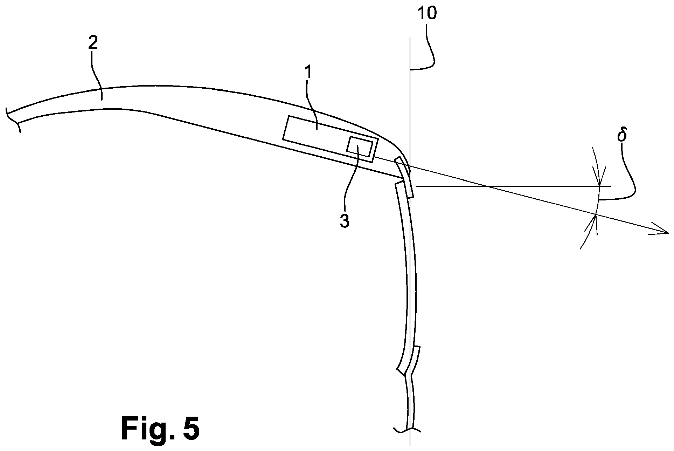

Dans un mode de réalisation particulièrement préféré, le dispositif selon l'invention comprend deux jeux de moyens 3 de mesure de distance de lecture et/ou d'écriture. Par exemple, chaque branche 2 de la monture 4 de lunettes peut être équipée de deux diodes d'émission et un capteur comme décrit ci-dessus. La figure 5 montre un exemple d'agencement d'un jeu de moyens 3 de mesure de distance du dispositif 1 par rapport au plan 10 moyen des deux verres 5 d'une monture 4 de lunettes . Le jeu de moyens 3 de mesure de distance peut, par exemple, être agencé avec un angle de tilt horizontal δ compris dans une plage allant de - 45° à 0°, et préférentiellement avec un angle voisin de -30° par rapport à la droite orthogonale au plan 10 moyen des deux verres (ou des deux cercles) de la monture 4. Ainsi, les moyens 3 de mesure sont agencés de manière convergente par rapport à la zone nasale de l'individu porteur de lunettes. De manière avantageuse, l'angle de tilt horizontal δ des capteurs peut être ajustable en fonction de la forme et/ou de la morphologie de l'individu.

De manière avantageuse, le dispositif selon un mode de réalisation comprend en outre des moyens de communication (non représentés) afin de communiquer avec un dispositif extérieur d'enregistrement et/ou d'affichage (non représenté). La communication peut être réalisée, par exemple, via un câble connecteur micro-USB ou une connexion sans fil (Bluetooth, etc.). Le dispositif peut également comprendre des moyens d'enregistrement (non représentés) pour enregistrer les distances mesurées de lecture et/ou d'écriture, la valeur mesurée de luminance et/ou le nombre de déclenchements des moyens d'avertissement. Les moyens d'enregistrement peuvent être constitués, par exemple, par une carte mémoire.

Préférentiellement, les paramètres tels que les valeurs des distances de consigne de lecture et/ou d'écriture, la valeur seuil de l'angle d'inclinaison et/ou la valeur de consigne de luminance sont personnalisables. Par exemple, l'opticien ou le médecin ophtalmologiste peut ajuster une ou plusieurs de ces valeurs au moyen de son ordinateur connecté au dispositif selon des modes de réalisation par un câble connecteur micro-USB ou une connexion sans fil (Bluetooth, etc.). Il est alors possible de tenir compte du fait que chaque personne portant des lunettes prend une posture bien individuelle pour les travaux en vision de près.

Le dispositif 1 selon l'invention peut être monté sur ou intégré dans l'une des branches 2 de la monture 4 des lunettes. Par exemple, le dispositif peut être fixé de manière amovible ou durable sur l'une des branches 2 de la monture 4. Le dispositif peut également être intégré dans l'une des branches 2 de la monture 4, comme illustré sur la figure 2. Comme décrit précédemment, il est également possible d'équiper chacune des deux branches 2 de la monture 4 avec le dispositif 1.

De manière avantageuse, le dispositif 1 selon l'invention est monté sur la branche 2 de la monture 4 du côté opposé à la main d'écriture du porteur de lunettes. Ainsi, le bon fonctionnement du dispositif n'est pas gêné par la main d'écriture du porteur et les mesures des distances de lecture et/ou d'écriture peuvent être effectuées correctement.

Le dispositif selon les modes de réalisation décrits ci-dessus présente les avantages d'être compact, léger et d'un faible coût. Le dispositif permet de mesurer les distances au plan de travail avec une précision de l'ordre du centimètre, et ce même avec des angles d'incidence importants. Le dispositif est également adapté pour répondre aux contraintes liées aux postures de droitier ou de gaucher.

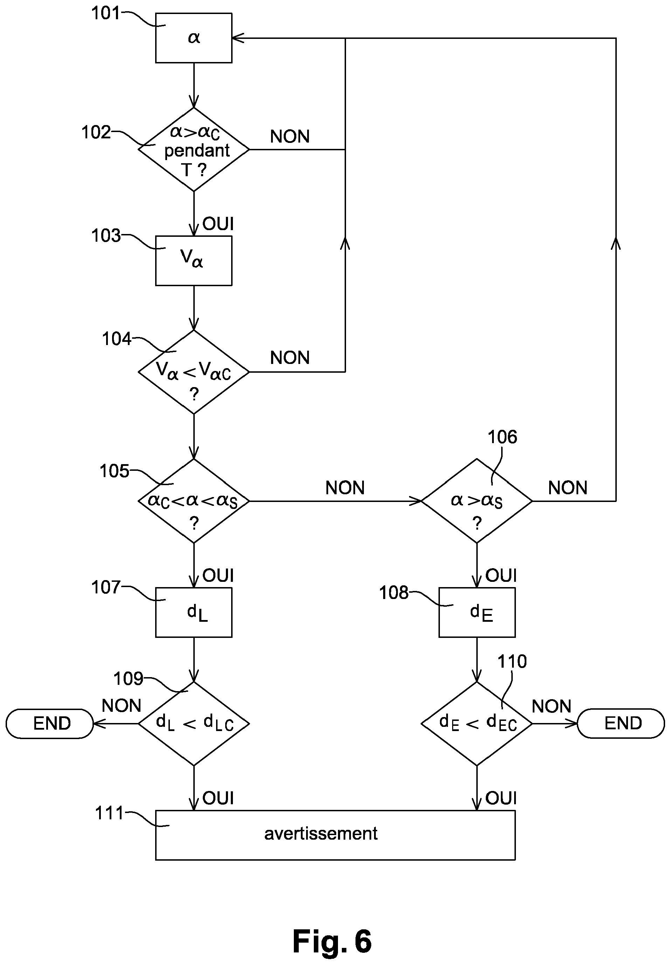

Selon un deuxième aspect, la présente invention concerne un procédé de détermination d'un mode d'écriture ou de lecture d'un porteur de lunettes au moyen d'un dispositif selon les modes de réalisation décrits ci-dessus. Un mode de réalisation du procédé est représenté schématiquement sur la figure 6 et comprend les étapes suivantes. L'angle d'inclinaison α du plan moyen des deux verres est mesuré (étape 101). Il est déterminé (étape 102) si l'angle d'inclinaison α est supérieur à un angle d'inclinaison de consigne α_{c} pendant une durée prédéterminée T. L'angle d'inclinaison de consigne α_{c} peut être, par exemple, de l'ordre de -10° par rapport à la verticale. La temporisation permet d'éviter de déclencher l'avertissement lorsqu'un objet passe de manière passagère devant la monture de lunettes de la personne. Par exemple, la durée prédéterminée T peut être de l'ordre de 10 à 30 secondes environ.

Si l'angle d'inclinaison α est supérieur à l'angle d'inclinaison de consigne α_{c} pendant la durée prédéterminée T, un paramètre v_{α} de déplacement de la position et/ou orientation de la tête est ensuite déterminé (étape 103). Cette détermination peut être effectuée, par exemple, par un accéléromètre ou un gyromètre intégré au dispositif selon le premier aspect de l'invention ou, alternativement, intégré à la monture de lunettes.

Le paramètre v_{α} de déplacement de la position et/ou orientation de la tête peut comprendre, par exemple, la vitesse du déplacement associé à un angle lacet, à un angle de tangage et/ou à un angle de roulis de la tête.

La mesure du paramètre du déplacement de la tête permet de savoir si la personne est effectivement en train de lire ou d'écrire. En effet, lorsque la tête de la personne bouge beaucoup et/ou rapidement, il est peu probable que la personne effectue des travaux de lecture ou d'écriture. Ainsi, des mesures de distance dₜ de travail ne sont effectuées que si le porteur de lunettes est réellement en mode lecture ou écriture, afin de permettre une gestion efficace des ressources d'énergie électrique, par exemple la durée de vie de la batterie.

Si le paramètre de déplacement de la tête est inférieur à une valeur seuil de déplacement, une distinction est effectuée entre un mode lecture et un mode écriture selon l'angle seuil α_{S} d'inclinaison (étapes 105 et 106). Comme décrit précédemment, le mode lecture est associé à un angle d'inclinaison α inférieur à l'angle seuil α_{S} d'inclinaison et supérieur à l'angle d'inclinaison de consigne α_{c} et à une distance d_{LC} de consigne de lecture, et le mode écriture est associé à un angle d'inclinaison α supérieur à l'angle seuil α_{S} d'inclinaison et à une distance d_{EC} de consigne d'écriture.

Si la personne est en mode lecture, la distance d_{L} de lecture est mesurée entre le plan moyen des deux des verres et le plan de lecture (étape 107). De manière similaire, si la personne est en mode écriture, la distance d_{E} d'écriture est mesurée entre le plan moyen des deux verres (ou des deux cercles de la monture) et le plan d'écriture (étape 108). S'il est déterminé que la distance mesurée d_{L}, d_{E}, selon le mode, est inférieure à la distance d_{LC}, d_{EC} de consigne de lecture ou d'écriture (étapes 109 et 110, respectivement), un avertissement est déclenché afin d'avertir le porteur de corriger sa posture (étape 111).

Selon un mode de réalisation, le mode lecture est associé à une distance supplémentaire de consigne de lecture et le mode écriture est associé à une distance supplémentaire de consigne d'écriture. Le procédé comprend alors en outre l'étape du déclenchement de l'avertissement lorsque la distance mesurée de lecture/écriture est inférieure à la plus grande valeur entre la distance de consigne de lecture/écriture et la distance supplémentaire de consigne de lecture/écriture, respectivement. L'intensité et/ou la fréquence du déclenchement varient proportionnellement en fonction de la distance mesurée de lecture/écriture entre la distance de consigne et la distance supplémentaire de consigne de lecture/écriture, respectivement. Par exemple, la distance de consigne de lecture peut être de 29 cm, et la distance supplémentaire de consigne de lecture peut être de 24 cm. L'alarme est alors déclenchée lorsque la distance mesurée est inférieure à 29 cm, et peut consister en un signal sonore discontinu d'une certaine fréquence. La fréquence du signal sonore augmente lorsque la distance mesurée diminue entre 29 cm et 24 cm. Lorsque la distance mesurée est inférieur à 24 cm, le signal sonore peut être continu.

De manière préférentielle, le procédé selon l'invention comprend en outre l'enregistrement de données. Les données peuvent comprendre les distances mesurées de lecture et/ou d'écriture, la valeur mesurée de luminance et/ou le nombre de déclenchements de l'avertissement, ainsi que les dates et/ou heures associées. Les données enregistrées peuvent également être communiquées vers un dispositif extérieur d'enregistrement et/ou d'affichage, tel qu'un ordinateur, par exemple au moyen d'un câble connecteur micro-USB ou une connexion sans fil. Ainsi, les données peuvent être enregistrées et envoyées sur l'ordinateur de l'opticien ou du médecin ophtalmologiste qui suit la personne portant les lunettes.

De manière alternative, les données peuvent être communiquées en temps réel vers le dispositif extérieur d'enregistrement et/ou d'affichage.

Ainsi, l'opticien ou le médecin ophtalmologiste est en mesure de suivre le comportement du porteur de lunettes. Par exemple, le nombre ou la fréquence des déclenchements de l'alarme peuvent être des indices d'une myopie progressive du patient. L'opticien ou le médecin ophtalmologiste pourra alors adapter les seuils d'alerte pour une meilleure gestion de la posture face au plan de travail de l'individu ou la prescription optique, le cas échéant.

Le procédé selon les modes de réalisation décrits ci-dessus peut être réalisé indépendamment de la nature du plan de lecture et/ou d'écriture. Par exemple, le plan (ou support) de lecture et/ou d'écriture peut être constitué par du papier ou par un écran d'ordinateur, tel qu'une tablette numérique. De manière équivalente, le dispositif selon les modes de réalisation décrits ci-dessus est adapté pour fonctionner avec tout type de support de travail.

Le procédé selon les modes de réalisation décrits ci-dessus peut être notamment appliqué chez l'enfant myope ou hypermétrope suite à l'exposition continue et répétée à des mauvaises conditions de travail en vision de près (posture inadaptée, éclairage insuffisant, etc.), et pour réduire l'évolution du défaut visuel associé.

Il est à noter que le dispositif et le procédé selon des modes de réalisation peut également s'appliquer aux individus emmétropes (sans défaut visuel) en tant qu'outils de prévention.

## Revendications

1. Dispositif (1) de détermination d'un mode d'écriture ou de lecture d'un individu porteur de lunettes comprenant une monture (4) et deux verres (5), le dispositif (1) comprenant :
- des moyens (3, 31, 33) de mesure de la distance entre un élément de la monture (4) ou de la tête et un plan (12) de travail ;
- des moyens de mesure d'un angle d'inclinaison (α) d'un plan moyen (10) des deux verres (5) par rapport à la verticale (14) dans un plan (P) médian vertical de la tête perpendiculaire au plan moyen (10) ; et
- des moyens de contrôle aptes à comparer l'angle d'inclinaison (α) mesuré à un angle d'inclinaison de consigne et à déterminer un mode de lecture ou un mode d'écriture de l'individu en fonction de la comparaison, le mode lecture étant associé à une distance de consigne de lecture prédéterminée, et le mode écriture étant associé à une distance de consigne d'écriture prédéterminée,
le dispositif étant solidarisé à la monture (4) de lunettes, les moyens (3, 31, 33) de mesure de distance étant adaptés pour mesurer la distance entre le plan moyen (10) des deux verres (5) de la monture (4) et un plan (12) de travail, **caractérisé en ce que** les moyens (3, 31, 33) de mesure de distance comprennent deux émetteurs (31) agencés, dans ledit plan vertical (P), avec un angle non nul entre leurs axes principaux d'émission (310, 311), et un récepteur (33) agencé de manière à pouvoir recevoir le signal émis par au moins l'un des deux émetteurs (31) et réfléchi par le plan (12) de travail.

2. Dispositif (1) selon la revendication 1, comprenant en outre des moyens d'avertissement, déclenchés par les moyens de contrôle lorsque :
- en mode lecture, la distance mesurée est inférieure à la distance de consigne de lecture prédéterminée, et/ou
- en mode écriture, la distance mesurée est inférieure à la distance de consigne d'écriture prédéterminée.

3. Dispositif (1) selon l'une des revendications précédentes, dans lequel les moyens de contrôle sont aptes à distinguer entre le mode lecture et le mode écriture en fonction d'un angle seuil d'inclinaison prédéterminé si l'angle d'inclinaison (α) mesuré est supérieur à l'angle d'inclinaison de consigne, le mode lecture étant associé à un angle d'inclinaison (α) inférieur à l'angle seuil d'inclinaison prédéterminé et supérieur à l'angle d'inclinaison de consigne, et le mode écriture étant associé à un angle d'inclinaison (α) supérieur à l'angle seuil d'inclinaison prédéterminé.

4. Dispositif (1) selon l'une des revendications 2 et 3, comprenant en outre des moyens (35) de mesure d'une valeur de luminance du plan de lecture et/ou d'écriture, dans lequel les moyens d'avertissement sont déclenchés par les moyens de contrôle lorsque la valeur mesurée de luminance est inférieure à une valeur de consigne de luminance fonction de la distance mesurée et du mode lecture ou écriture dans lequel se trouve l'individu porteur de lunettes.

5. Dispositif (1) selon l'une des revendications 1 à 4, les moyens (3, 31, 33) de mesure de distance sont agencés avec un angle de leurs axes principaux (310, 311, 330) compris entre 0° et 20° par rapport au plan (10) moyen des deux verres (5) de la monture (4), dans ledit plan vertical (P).

6. Dispositif (1) selon l'une des revendications 1 à 5, dans lequel les moyens (3, 31, 33) de mesure de distance sont agencés avec un angle de tilt horizontal δ de leurs axes principaux compris entre - 45° et 0° par rapport à la droite orthogonale au plan (10) moyen des deux verres (5) de la monture (4).

7. Dispositif selon la revendication 6, dans lequel l'angle de tilt horizontal δ est ajustable en fonction de la forme et/ou de la morphologie de l'individu porteur de lunettes.

8. Dispositif (1) selon l'une des revendications précédentes, dans lequel les moyens de mesure de l'angle d'inclinaison comprennent un inclinomètre et/ou un accéléromètre.

9. Dispositif (1) selon l'une des revendications précédentes, comprenant en outre des moyens de communication aptes à communiquer avec un dispositif extérieur d'enregistrement et/ou d'affichage.

10. Dispositif (1) selon l'une des revendications 2 à 9, dans lequel les moyens d'avertissement comprennent au moins l'un d'une alarme visuelle, d'une alarme sonore et d'un vibreur, dans lequel l'alarme visuelle est visible par le porteur et/ou par une personne autre que le porteur.

11. Dispositif (1) selon l'une des revendications 2 à 10, comprenant en outre des moyens d'enregistrement aptes à enregistrer les distances mesurées, la valeur mesurée de luminance et/ou le nombre de déclenchements des moyens d'avertissement.

12. Dispositif (1) selon l'une des revendications 4 à 11, dans lequel les valeurs des distances de consigne de lecture et/ou d'écriture et/ou la valeur de consigne de luminance sont personnalisables.

13. Procédé de détermination d'un mode d'écriture ou de lecture d'un individu porteur de lunettes au moyen d'un dispositif (1) selon l'une des revendications 1 à 12, le procédé comprenant les étapes suivantes :
- mesurer la distance de travail entre l'élément de la monture (4) ou de la tête et le plan (12) de travail ;
- mesurer l'angle d'inclinaison (α) du plan (10) moyen des deux verres (5) par rapport à la verticale (14) dans ledit plan vertical (P) ;
- comparer l'angle d'inclinaison (α) mesuré à un angle d'inclinaison de consigne ; et
- déterminer un mode de lecture ou un mode d'écriture de l'individu en fonction de la comparaison, le mode lecture étant associé à une distance de consigne de lecture prédéterminée, et le mode écriture étant associé à une distance de consigne d'écriture prédéterminée.

14. Procédé selon la revendication 13, comprenant en outre l'étape de :
- déclencher un avertissement afin d'avertir le porteur de corriger sa posture, en fonction du mode de lecture ou d'écriture, si ladite distance mesurée est inférieure à la distance de consigne prédéterminée.

15. Procédé selon l'une des revendications 13 et 14, comprenant en outre les étapes de :
- déterminer un paramètre (v_{α}) de déplacement de la tête si l'angle d'inclinaison (a) est supérieur à l'angle d'inclinaison de consigne (α_{c}) pendant une durée prédéterminée (T) ; et
- distinguer, si ledit paramètre (v_{α}) de déplacement est inférieur à une valeur seuil (v_{αC}) de déplacement, entre le mode lecture et le mode écriture en fonction de l'angle seuil d'inclinaison (α_{S}), le mode lecture étant associé à un angle d'inclinaison (α) inférieur à l'angle seuil d'inclinaison (α_{S}) et supérieur à l'angle d'inclinaison de consigne (α_{c}), et le mode écriture étant associé à un angle d'inclinaison (α) supérieur à l'angle seuil d'inclinaison (α_{S}).

16. Procédé selon l'une des revendications 13 à 15, comprenant en outre les étapes de :
- enregistrer des données, les données comprenant les distances mesurées de lecture et/ou d'écriture, la valeur mesurée de luminance et/ou le nombre de déclenchements de l'avertissement ; et
- communiquer les données enregistrées vers un dispositif extérieur d'enregistrement et/ou d'affichage.

17. Procédé selon l'une des revendications 13 à 16, comprenant en outre l'étape de communiquer en temps réel des données vers un dispositif extérieur d'enregistrement et/ou d'affichage, les données comprenant les distances mesurées de lecture et/ou d'écriture, la valeur mesurée de luminance et/ou le nombre de déclenchements de l'avertissement.

## Patentansprüche

1. Vorrichtung (1) zur Bestimmung eines Schreib- oder Lesemodus einer Person, die eine Brille trägt, welche ein Gestell (4) und zwei Gläser (5) enthält, wobei die Vorrichtung (1) enthält:
- Einrichtungen (3, 31, 33) zur Messung des Abstands zwischen einem Element des Gestells (4) oder des Kopfes und einer Arbeitsebene (12) ;
- Einrichtungen zur Messung eines Neigungswinkels (a) einer Mittelebene (10) der zwei Gläser (5) bezüglich der Senkrechten (14) in einer senkrechten Medianebene (P) des Kopfes lotrecht zur Mittelebene (10); und
- Kontrolleinrichtungen, die den gemessenen Neigungswinkel (a) mit einem Soll-Neigungswinkel vergleichen und einen Lesemodus oder einen Schreibmodus der Person abhängig vom Vergleich bestimmen können, wobei der Lesemodus einem vorbestimmten Lese-Sollabstand zugeordnet ist, und der Schreibmodus einem vorbestimmten Schreib-Sollabstand zugeordnet ist,
wobei die Vorrichtung fest mit dem Brillengestell (4) verbunden ist, wobei die Abstandsmesseinrichtungen (3, 31, 33) geeignet sind, den Abstand zwischen der Mittelebene (10) der zwei Gläser (5) des Gestells (4) und einer Arbeitsebene (12) zu messen,
**dadurch gekennzeichnet, dass** die Einrichtungen (3, 31, 33) zur Abstandsmessung zwei Sender (31), die in der senkrechten Ebene (P) mit einem Winkel ungleich Null zwischen ihren Hauptsendeachsen (310, 311) angeordnet sind, und einen Empfänger (33) enthalten, der so angeordnet ist, dass er das von mindestens einem der zwei Sender (31) gesendete und von der Arbeitsebene (12) reflektierte Signal empfangen kann.

2. Vorrichtung (1) nach Anspruch 1, die außerdem Warneinrichtungen enthält, die von den Kontrolleinrichtungen ausgelöst werden, wenn:
- im Lesemodus der gemessene Abstand geringer als der vorbestimmte Lese-Sollabstand ist, und/oder
- im Schreibmodus der gemessene Abstand geringer als der vorbestimmte Schreib-Sollabstand ist.

3. Vorrichtung (1) nach einem der vorhergehenden Ansprüche, wobei die Kontrolleinrichtungen abhängig von einem vorbestimmten Neigungs-Schwellenwinkel zwischen dem Lesemodus und dem Schreibmodus unterscheiden können, wenn der gemessene Neigungswinkel (a) größer als der Soll-Neigungswinkel ist, wobei der Lesemodus einem Neigungswinkel (a) kleiner als der vorbestimmte Neigungs-Schwellenwinkel und größer als der Soll-Neigungswinkel zugeordnet ist, und der Schreibmodus einem Neigungswinkel (a) größer als der vorbestimmte Neigungs-Schwellenwinkel zugeordnet ist.

4. Vorrichtung (1) nach einem der Ansprüche 2 und 3, die außerdem Einrichtungen (35) zur Messung eines Helligkeitswerts der Lese- und/oder Schreibebene enthält, wobei die Warneinrichtungen von den Kontrolleinrichtungen ausgelöst werden, wenn der gemessene Helligkeitswert niedriger als ein Helligkeits-Sollwert ist, abhängig vom gemessenen Abstand und vom Lese- oder Schreibmodus, in dem sich die brillentragende Person befindet.

5. Vorrichtung (1) nach einem der Ansprüche 1 bis 4, wobei die Abstandsmesseinrichtungen (3, 31, 33) mit einem Winkel ihrer Hauptachsen (310, 311, 330) zwischen 0° und 20° bezüglich der Mittelebene (10) der zwei Gläser (5) des Gestells (4) in der senkrechten Ebene (P) angeordnet sind.

6. Vorrichtung (1) nach einem der Ansprüche 1 bis 5, wobei die Abstandsmesseinrichtungen (3, 31, 33) mit einem waagrechten Kippwinkel δ ihrer Hauptachsen zwischen -45° und 0° bezüglich der Geraden orthogonal zur Mittelebene (10) der zwei Gläser (5) des Gestells (4) angeordnet sind.

7. Vorrichtung nach Anspruch 6, wobei der waagrechte Kippwinkel δ abhängig von der Form und/oder der Morphologie der brillentragenden Person einstellbar ist.

8. Vorrichtung (1) nach einem der vorhergehenden Ansprüche, wobei die Messeinrichtungen des Neigungswinkels einen Neigungsmesser und/oder einen Beschleunigungsmesser enthalten.

9. Vorrichtung (1) nach einem der vorhergehenden Ansprüche, die außerdem Kommunikationseinrichtungen enthält, die mit einer externen Speicher- und/oder Anzeigevorrichtung kommunizieren können.

10. Vorrichtung (1) nach einem der Ansprüche 2 bis 9, wobei die Warneinrichtungen mindestens einen von einem optischen Alarm, einen akustischen Alarm und einem Vibrationsalarm enthalten, wobei der optische Alarm für den Träger und/oder für eine andere Person als der Träger sichtbar ist.

11. Vorrichtung (1) nach einem der Ansprüche 2 bis 10, die außerdem Speichereinrichtungen enthält, die die gemessenen Abstände, den gemessenen Helligkeitswert und/oder die Anzahl von Auslösungen der Warneinrichtungen speichern können.

12. Vorrichtung (1) nach einem der Ansprüche 4 bis 11, wobei die Werte der Lese- und/oder Schreib-Sollabstände und/oder der Helligkeits-Sollwert benutzeranpassbar sind.

13. Verfahren zur Bestimmung eines Schreib- oder Messmodus einer brillentragenden Person mittels einer Vorrichtung (1) nach einem der Ansprüche 1 bis 12, wobei das Verfahren die folgenden Schritte enthält:
- Messen des Arbeitsabstands zwischen dem Element des Gestells (4) oder des Kopfes und der Arbeitsebene (12);
- Messen des Neigungswinkels (a) der Mittelebene (10) der zwei Gläser (5) bezüglich der Senkrechten (14) in der senkrechten Ebene (P);
- Vergleich des gemessenen Neigungswinkels (a) mit einem Soll-Neigungswinkel; und
- Bestimmen eines Lesemodus oder eines Schreibmodus der Person abhängig vom Vergleich, wobei der Lesemodus einem vorbestimmten Lese-Sollabstand zugeordnet ist, und der Schreibmodus einem vorbestimmten Schreib-Sollabstand zugeordnet ist.

14. Verfahren nach Anspruch 13, das außerdem den Schritt enthält:
- Auslösen einer Warnung, um den Träger zu warnen, seine Haltung zu korrigieren, abhängig vom Lese- oder Schreibmodus, wenn der gemessene Abstand geringer als der vorbestimmte Sollabstand ist.

15. Verfahren nach einem der Ansprüche 13 und 14, das außerdem die Schritte enthält:
- Bestimmen eines Bewegungsparameters (v_{α}) des Kopfes, wenn der Neigungswinkel (α) während einer vorbestimmten Dauer (T) größer ist als der Soll-Neigungswinkel (α_{c}); und
- Unterscheiden, ob der Bewegungsparameter (v_{α}) zwischen dem Lesemodus und dem Schreibmodus geringer als ein Bewegungs-Schwellwert (v_{αC}) ist, abhängig vom Neigungs-Schwellenwinkel (α_{S}), wobei der Lesemodus einem Neigungswinkel (α) geringer als der Neigungs-Schwellenwinkel (αₛ) und größer als der Soll-Neigungswinkel (α_{C}) zugeordnet ist, und der Schreibmodus einem Neigungswinkel (α) größer als der Neigungs-Schwellenwinkel (αₛ) zugeordnet ist.

16. Verfahren nach einem der Ansprüche 13 bis 15, das außerdem die Schritte enthält:
- Speichern von Daten, wobei die Daten die gemessenen Lese- und/oder Schreibabstände, den gemessenen Helligkeitswert und/oder die Anzahl von Auslösungen der Warnung enthalten; und
- Kommunizieren der Daten zu einer externen Speicher- und/oder Anzeigevorrichtung.

17. Verfahren nach einem der Ansprüche 13 bis 16, das außerdem den Schritt der Kommunikation der Daten in Echtzeit an eine externe Speicher- und/oder Anzeigevorrichtung enthält, wobei die Daten die gemessenen Lese- und/oder Schreibabstände, den gemessenen Helligkeitswert und/oder die Anzahl von Auslösungen der Warnung enthalten.

## Claims

1. Device (1) for determining a reading or writing mode of an individual wearer of spectacles comprising a frame (4) and two eyeglasses (5), the device (1) comprising:
- means (3, 31, 33) for measuring the distance between an element of the frame (4) or of the head and a working plane (12);
- means for measuring an angle of inclination (α) of a mean plane (10) of the two eyeglasses (5) relative to the vertical (14) in a vertical median plane (P) of the head perpendicular to the mean plane (10); and
- controlling means able to compare the measured angle of inclination (α) to a setpoint angle of inclination and to determine a reading mode or a writing mode of the individual depending on the comparison, the reading mode being associated with a predetermined reading setpoint distance, and the writing mode being associated with a predetermined writing setpoint distance,
the device being securely fastened to the spectacle frame (4), the means (3, 31, 33) for measuring distance being suitable for measuring the distance between the mean plane (10) of the two eyeglasses (5) of the frame (4) and a working plane (12),
**characterized in that** the means (3, 31, 33) for measuring distance comprise two emitters (31) arranged, in said vertical plane (P), with a non-zero angle between their main emission axes (310, 311), and a receiver (33) arranged so as to be able to receive the signal emitted by at least one of the two emitters (31) and reflected by the working plane (12).

2. Device (1) according to Claim 1, furthermore comprising warning means, triggered by the controlling means when:
- in reading mode, the measured distance is smaller than the predetermined reading setpoint distance; and/or
- in writing mode, the measured distance is smaller than the predetermined writing setpoint distance.

3. Device (1) according to either of the preceding claims, wherein the controlling means are able to distinguish between the reading mode and the writing mode depending on a predetermined threshold angle of inclination if the measured angle of inclination (α) is larger than the setpoint angle of inclination, the reading mode being associated with an angle of inclination (α) smaller than the predetermined threshold angle of inclination and larger than the setpoint angle of inclination, and the writing mode being associated with an angle of inclination (α) larger than the predetermined threshold angle of inclination.

4. Device (1) according to either of Claims 2 and 3, furthermore comprising means (35) for measuring a luminance value of the reading and/or writing plane, wherein the warning means are triggered by the controlling means when the measured luminance value is lower than a setpoint luminance value function of the measured distance and the writing or reading mode in which the individual wearer of spectacles is found.

5. Device (1) according to one of Claims 1 to 4, the means (3, 31, 33) for measuring distance are arranged with an angle of their main axes (310, 311, 330) comprised between 0° and 20° relative to the mean plane (10) of the two eyeglasses (5) of the frame (4), in said vertical plane (P).

6. Device (1) according to one of Claims 1 to 5, wherein the means (3, 31, 33) for measuring distance are arranged with an angle of horizontal tilt δ of their main axes comprised between -45° and 0° relative to the straight line orthogonal to the mean plane (10) of the two eyeglasses (5) of the frame (4).

7. Device according to Claim 6, wherein the angle of horizontal tilt δ is adjustable depending on the shape and/or morphology of the individual wearer of spectacles.

8. Device (1) according to one of the preceding claims, wherein the means for measuring the angle of inclination comprise an inclinometer and/or an accelerometer.

9. Device (1) according to one of the preceding claims, furthermore comprising communicating means able to communicate with an exterior recording and/or displaying device.

10. Device (1) according to one of Claims 2 to 9, wherein the warning means comprise at least one of a visual alarm, an audio alarm and a vibrator, in which the visual alarm is visible to the wearer and/or to a person other than the wearer.

11. Device (1) according to one of Claims 2 to 10, furthermore comprising recording means able to record the measured distances, the measured luminance value and/or the number of triggerings of the warning means.

12. Device (1) according to one of Claims 4 to 11, wherein the values of the writing and/or reading setpoint distances and/or the luminance setpoint value are personalizable.

13. Method for determining a reading or writing mode of an individual wearer of spectacles by means of a device (1) according to one of Claims 1 to 12, the method comprising the following steps:
- measuring the working distance between the element of the frame (4) or of the head and the working plane (12);
- measuring the angle of inclination (α) of the mean plane (10) of the two eyeglasses (5) relative to the vertical (14) in said vertical plane (P);
- comparing the measured angle of inclination (α) to a setpoint angle of inclination; and
- determining a reading mode or a writing mode of the individual depending on the comparison, the reading mode being associated with a predetermined reading setpoint distance, and the writing mode being associated with a predetermined writing setpoint distance.

14. Method according to Claim 13, furthermore comprising the step of:
- triggering a warning in order to warn the wearer to correct his posture, depending on the writing or reading mode, if said measured distance is smaller than the predetermined setpoint distance.

15. Method according to either of Claims 13 and 14, furthermore comprising the steps of:
- determining a parameter (v_{α}) of movement of the head if the angle of inclination (α) is larger than the setpoint angle of inclination (α_{c}) during a predetermined duration (T); and
- distinguishing, if said movement parameter (v_{α}) is lower than a threshold movement value (v_{αC}), between the reading mode and the writing mode depending on the threshold angle of inclination (α_{S}), the reading mode being associated with an angle of inclination (α) smaller than the threshold angle of inclination (αₛ) and larger than the setpoint angle of inclination (α_{c}), and the writing mode being associated with an angle of inclination (α) larger than the threshold angle of inclination (α_{S}).

16. Method according to one of Claims 13 to 15, furthermore comprising the steps of:
- recording data, the data comprising the measured reading and/or writing distances, the measured luminance value and/or the number of triggerings of the warning; and
- communicating the recorded data to an exterior recording and/or displaying device.

17. Method according to one of Claims 13 to 16, furthermore comprising the step of communicating in real-time data to an exterior recording and/or displaying device, the data comprising the measured reading and/or writing distances, the measured luminance value and/or the number of triggerings of the warning.
